# EUROPEAN PATENT SPECIFICATION

(11) **EP 0 610 342 B1**
(45) Date of publication and mention of the grant of the patent: **30.07.1997**
(21) Application number: 92922587.8
(22) Date of filing: 04.11.1992
(51) Int. Cl.: B60G 3/00

(54) **A SUSPENSION SYSTEM FOR THE STEERING AND DRIVING WHEEL IN A VEHICLE**
AUFHÄNGUNGSSYSTEM FÜR DAS GELENKTE UND ANGETRIEBENE FAHRZEUGRAD
SYSTEME DE SUSPENSION POUR LA ROUE DE DIRECTION ET DE COMMANDE D'UN VEHICULE

(30) Priority: 04.11.1991 FI 915187; 14.04.1992 FI 921654
(43) Date of publication of application: 17.08.1994
(73) Proprietor: RAUNISTO, Airi, SF-13210 Hämeenlinna (FI)
(72) Inventor: RAUNISTO, Yrjö, SF-13210 Hämeenlinna (FI)
(74) Representative: Nyberg, Bengt
(86) International application number: FI9200298
(87) International publication number: WO9308996

(56) References cited:
- DE-A- 1 806 022
- NO-A- 873 007
- US-A- 3 404 747

## Description

The invention relates to a system according to patent claim 1 by means of which the turning and driving wheel of a vehicle is suspended to the vehicle body.

Previously known is the utilization of hydraulic cylinders as a vehicle spring and attenuator when the cylinder fluid is connected by delivery tubes to a hydraulic accumulator, whereto the fluid flows or from where it flows back. Baffling is produced for instance by choking the delivery tubes. A cylinder is used to suspend the turning wheels also as a s.c. king bolt while letting the piston revolve in the cylinder in the turning motion direction. The rigidity of the spring suspension has been adjusted with the cylinder pressure or degree of attenuation and the ground clearance is, as is well known, adjusted by a cylinder with spring function. As example the German publication 1 120 290 is mentioned.

In the first place, the known solutions have been applied to private cars with advanced suspension automation. As to their construction and properties, they do not fit to low-speed vehicles or working machines. In working machines, such as excavators and loaders, there is no reason use the suspension at all while working. To prevent swaying during transportation of loads with working machines, the suspension may be kept in function only either in the front or rear wheels.

In many cases all the working machine wheels are wanted to be driving, whereat power transmission must also be arranged for the driving wheels and often also spring suspension. As it is known, the power transmission is effected over the cardan shaft and by means of hub motors.

For example, in publication DE-1 120 290 the cylinder portion of the hydraulic cylinder is connected to a body, on which the wheel is fastened with bearings, and which is the hub part of the wheel. The fluid motor is an independent detachable device that transmits the rotation motion over the hub centre to the brake drum illustrated in the figure. In this construction the hydraulic motor is not, as is not any part of it, a supporting structure, neither does any device, related to wheel suspension, be in contact with it. The construction becomes quite complicated when the hydraulic driving motor is made easily detachable and the hydraulic motor bearing is not utilized as bearing for the wheel.

By means of the system according to the invention a decisive improvement of the suspension of a steering and driving wheel is achieved and the invention is characterized in what is presented in the patent claims.

The most important advantage of the invention is the fact that in a working machine with hydraulic power transmission also the turning wheels can be provided with a simple and adjustable suspension and since the hydraulic cylinder functions as a suspensory element, this cylinder can be utilized by carrying out with it vertical working machine motions, especially when it is the question of slow and accurate motions. The wheel bearing system is advantgeously arranged with a hydraulic hub motor, on the rotating part of which the wheel is directly fastened. The wheel and the hub motor are supported from the motor dead part by means of suspension to the vehicle body or axle. Wheel suspension from the axle means that this solution offers an advantageous possibility to increase the track gauge by utilizing a telescopic axle.

In the following the invention is described in detail with reference to the enclosed drawing, wherein
Fig. 1 is a wheel suspension system.
Fig. 2 is a hydraulic system of a suspension system.
Fig. 3 is a wheel suspension system in an extending telescopic axle.
Fig. 4 is a hydraulic hub motor.

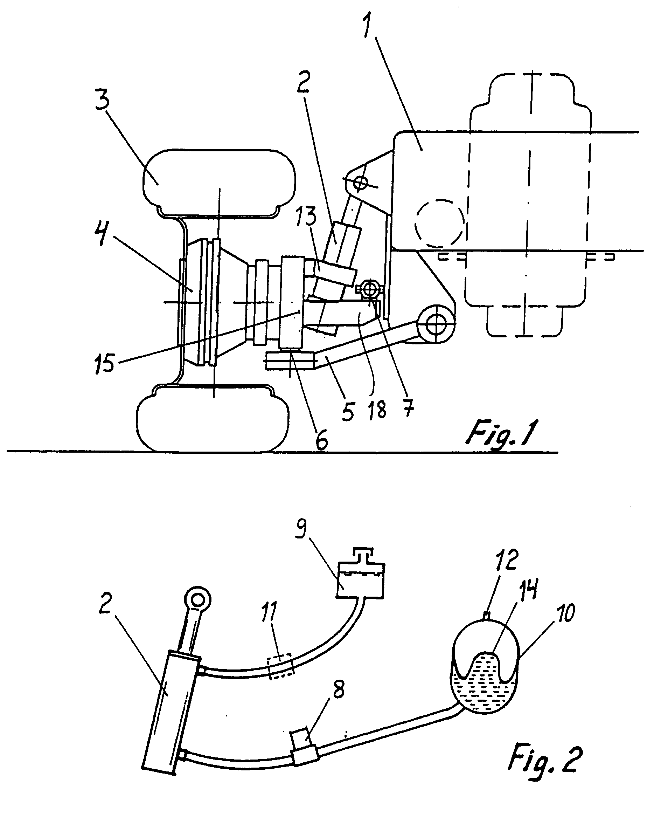

Figure 1 shows the wheel suspension of a working machine furnished with a body 1. Wheel 3 has a motor 4 in its hub. The motor is operated with hydraulic pressure and includes also the wheel bearing. The one hub motor end is dead and comprises and end component 15, the lower part of which is a ball and socket joint 6. From this joint a triangular support arm 5 extrudes to the vehicle body 1, into which it is articulated allowing the ball and socket joint to move vertically. On the end component 15 there are auxiliary parts, for instance fasteners 13 and 18, by means of which the cylinder part of the hydraulic cylinder 2 is fixed to the end component. Due to the fasteners, the cylinder and the motor body are one rigid part. The piston of cylinder 2 is articulated from its end to body 1. Wheel 3 is thus supported on the ball and socket joint 6 and the cylinder piston rod. The wheel rotation motion is transmitted as a push/pull rod motion to an articulated loop 7, on which the rod is fastened. The hydraulic pressure fluid is brought to the hub motor and the cylinder over hoses (not illustrated). The wheel suspension yields only if the cylinder pressure fluid can flow into the cylinder or out from it.

The wheel turns by rotating it around its axle, which runs from the upper joint-point of the piston rod to the ball and socket joint 6. Cylinder 2, in the first place its piston and piston rod, function in assocition with the ball and socket joint 6 as a turning bearing of wheel 3. The wheel steering geometry can, as it is known, be modified by changing the location and direction of the hydraulic cylinder or the location of the ball and socket joint. The ball and socket joint can also be advantageously sited in the cylinder lower end.

Figure 2 shows an application of a hydraulic circuit, where cylinder 2 is double-acting and the lower part of its piston connected to a hydraulic accumulator 10 and the upper part of the piston connected to a fluid container 9. In the hydraulic accumulator the pressure fluid is separated by a membran 14 from the gas space, where nitrogen is used in suitable pressure. The nitrogen pressure, for instance 150 bar, is adjusted by valve 12, whereby cylinder 2 functions as suspension compressing or expanding the gas. In the tube line there is a valve 8 to block suspensive function of the cylinder. The valve can also be pressure-choking, whereby the degree of damping the suspension can be increased. There can also be a valve or a choker in the line leading to container 9, whereby it is possible to adjust suspension while the wheel is moving downward with regard to the body.

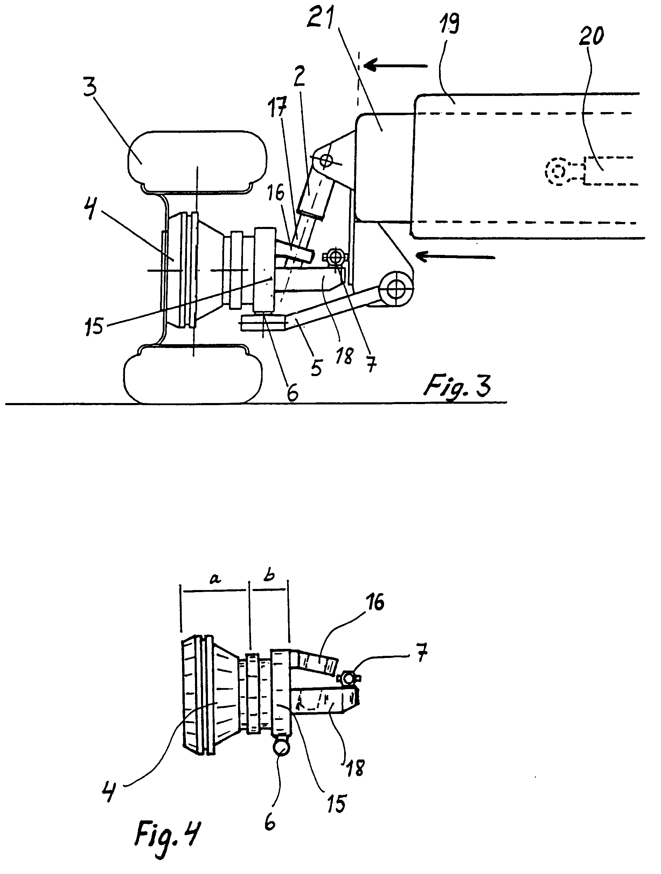

Figure 3 shows a cylinder turned upside down, whereby the piston is rigidly fastened to the hub motor body 15. Piston rod 17 is supported by parts 16 and 18 on the hub motor end. One end of cylinder 2 and the lower triangular support arm 5 are fixed to axle 21, that moves telescopically in a bigger axle 19. By means of cylinder 20 the axle 21 is pushed outward allowing increasement of the track gauge. The steering arm system, leading to loop 7, is kept in function by means of compensation cylinders or compensation rods. During working machine operation, increasement of the track gauge means additional working stability and, in many cases, it is possible to work without outriggers. Just the combination of suspension and hub motor, according to this invention, is well suited to be mounted on the end of an telescopically extendable axle, whereby even the wheel can still be steering. The end of a telescopic axle is sufficient as a fixation point for the suspension elelments and wheel fastening.

Figure 4 shows a motor wich has a rotation part (a) and a dead body portion (b). In the dead end there are supporting parts 16 and 18 for hydraulic cylinder mounting. In the same end there is also a ball and socket joint 6 for wheel suspension.

In figure 2 there can, of course, instead of container 9, be also a hydraulic accumulator, whereby the suspension circuit can be totally disconnected from the other hydraulic circle of the machine. Most generally, valve 8 is totally closing and opening and, in addition, there can be in the line a pressure restricting valve and choke valves either parallel or in progression.

While working with a working machine, there can be situations, where suspension is needed and situations, where suspension could cause dangerous swaying. Therefore, in the wheels, at least in either end of the working machine, suspension should be provided, which could be switched on and off upon need. During operation, suspension may not be used in lifting and excavation situations, because it causes violent jerks by sudden load dropping and releasing situations.

It is easy utilize the suspensory cylinder for effecting the working machine vertical motion by connecting the suspensory hydraulic circuit to the working machine operational hydraulic circuit. The pressure fluid volume in the suspensory circuit can thereby be adjusted eihter to increase the ground clearance or to carry out the vertical motion. Track gauge enlargement increases the vehicle stability during operation and replaces often separate outriggers.

## Claims

1. A suspension system for the steering and driving wheel in a vehicle, wherein a hydraulic cylinder (2) is used as suspension and wherein the same cylinder functions in form of a fulcrum pin as the bearing of the steering and driving wheel (3) turning motion and wherein the power transmission to the wheel is effected with a hydraulic system and by means of a hub motor (4) connected to the same, **characterized in** that the cylinder body or piston (17) of the hydraulic cylinder (2) is fastened to a dead end (15) of the hub motor as a rigid unit with said end, the wheel (3) is fastened directly on the rotating part (a) of the hub motor (4), and said wheel utilizing the bearing of said hub motor.

2. A system according to patent claim 1 **characterized in** that a ball and socket joint (6) of a lower support arm (5) is fastened to the said hub motor end (15).

3. A system according to patent claim 1 **characterized in** that the ball and socket joint (6) of the lower support arm (5) is fastened to the lower end of the said hydraulic cylinder or close to it.

4. A system according to patent claims 1, 2 or 3 **characterized in** that in order to increase the rigidity of the suspension system, it must be possible to clock the suspensory effect of the hydraulic cylinder (2).

5. A system according to any of the above patent claims 1 - 4 **characterized in** that by means of the hydraulic cylinder, which is connected to the hub motor, it is possible to carry out the operational motion of a working machine when the hydraulic circuit of the suspension is connected to the operational hydraulic circuit of the working machine.

6. A system according to any of the above patent claims 1 - 5 **characterized in** that in a pipe line between cylinder (2) and a hydraulic accumulator (10) there is a valve restricting the flow of pressure fluid.

7. A system according to any of the above patent claims 1 - 6 **characterized in** that the cylinder (2), from its upper end, and the lower support arm (5) are fastened only on the end of a telescopically extendable axle (21) allowing to change the track gauge by extending or shortening the said axle.

8. A system according to any of the above patent claims 1 - 7 **characterized in** that the dead end (15) of the hub motor forms a portion of the supporting construction in the wheel suspension system.

## Patentansprüche

1. Ein Aufhängungssystem für das Lenk- und Treibrad in einem Fahrzeug, worin ein Zylinder (2) als Tragfeder verwendet wird und worin der gleiche Zylinder die Funktion eines Drehbolzens zur Lagerung der Drehbewegung des Treib- und Lenkrads (3) hat, und worin die Kraftübertragung zum Rad mit einem hydraulischen System und mit einem zu diesem System angeschlossenen Nabenmotor (4) geschieht, **gekennzeichnet dadurch**, dass der Zylinderkörper (2) oder der Kolben (17 des Zylinders zum drehfreihen Ende (15) des Nabenmotors als eine steife Einheit festgemacht und das Rad (3) direkt zum rotierenden Teil (a) des Nabenmotors (4) angebracht worden ist, wobei die Lagerung des Nabenmotors vom genannten Rad benutzt wird.

2. Ein System gemäss Patentanspruch 1 **gekennzeichnet dadurch**, dass das Kugelgelenk (6) des unteren Tragarms (5) zum erwähnten Nabenmotorende (15) angebracht worden ist.

3. Ein System gemäss Patentanspruch 1 **gekennzeichnet dadurch**, dass das Kugelgelenk (6) des unteren Tragarms (5) zu oder dicht an dem genannten Nabenmotorende (15) angebracht worden ist.

4. Ein System gemäss Patentansprüchen 1, 2 oder 3 **gekennzeichnet dadurch**, dass es wegen Erhöhung der Steife des Aufhängungssystems möglich sein sollte, die Federwirkung des hydraulischen Zylinders (2) auszuschalten.

5. Ein System gemäss einem der obigen Patentansprüche 1 - 4 **gekennzeichnet dadurch**, dass man mit dem zum Nabenmotor angeschlossenen hydraulischen Zylinder (2) die Antriebsbewegung der Arbeitsmaschine ausführen kann, wenn der hydraulische Kreislauf der Aufhängung zum hydraulischen Betriebskreislauf der Arbeitsmaschine angeschlossen ist.

6. Ein System gemäss einem der obigen Patentansprüche 1 - 5 **gekennzeichnet dadurch**, dass es im Rohr zwischen Zylinder (2) und Druckspeicher (10) ein Ventil zur Reduzierung der Druckflüssigkeit gibt.

7. Ein System gemäss einem der obigen Patentansprüche 1 - 6 **gekennzeichnet dadurch**, dass der Zylinder (2) von seinem oberen Ende und der untere Tragarm (5) nur an das Ende einer tele-skopisch ausdehnenden Achse (21) festemacht sind, zur Änderung der Spurweite durch Verlängerung oder Verkürzung der genannten Achse.

8. Ein System gemäss einem der obigen Patentansprüche 1 - 7 **gekennzeichnet dadurch**, dass das drehfreihe Ende des Nabenmotors ein Teil der tragenden Konstruktion in dem Rad-Aufhängungs-system bildet.

## Revendications

1. Un système de suspension pour la roue de traction et de commande dans un véhicule dans lequel un vérin hydraulique (2) est utilisé comme suspension et dans lequel ce même vérin, en forme d'un axe d'articulation de genouillère, fonctionne comme le palier pour le mouvement de rotation de la roue de traction et de commande (3), et dans lequel la transmission de force vers la roue s'effectue à l'aide d'un système hydraulique et d'un moteur à moyeu (4) connecté à celui-ci, **caractérisé** par le fait que le corps (2) ou le piston (17) du vérin hydraulique est monté sur le bout mort (15) du moteur à moyeu, formant un ensemble rigide avec ledit bout, et la roue (3) est montée directement sur la partie rotative (a) du moteur à moyeu (4), dans lequel cas ladite roue utilise le palier dudit moteur à moyeu.

2. Un système conforme à la revendication 1, **caractérisé** par le fait que le joint à bille (6) du bras d'appui inférieur (5) est fixé audit bout mort (15) du moteur à moyeu.

3. Un système conforme à la revendication 1, **caractérisé** par le fait que le joint à bille (6) du bras d'appui inférieur (5) est fixé au bout inférieur dudit vérin hydraulique ou dans la proximité.

4. Un système conforme aux revendications 1, 2 ou 3, **caractérisé** par le fait qu'il doit être possible de couper l'effet de suspension du vérin hydraulique (2) afin d'augmenter la rigidité du système de suspension.

5. Un système conforme à l'une des revendications 1 à 4, **caractérisé** par le fait qu'à l'aide du vérin hydraulique, qui est connecté au moteur à moyeu, il est possible de réaliser le mouvement de travail d'un engin de travail lorsque le circuit hydraulique de la suspension est connecté au circuit hydraulique des fonctions de l'engin de travail.

6. Un système conforme à l'une des revendications 1 à 5, **caractérisé** par le fait qu'il y a, dans la tuyauterie entre le vérin (2) et l'accumulateur hydraulique (10), une soupape de restriction de débit du liquide pressurisé.

7. Un système conforme à l'une des revendications 1 à 6, **caractérisé** par le fait que le vérin (2), par son bout supérieur, et le bras d'appui inférieur (5) sont fixés seulement sur le bout d'un axe téléscopiquement extensible (21), ce qui permet de modifier l'écartement des roues en étendant et raccourcissant ledit axe.

8. Un système conforme à l'une des revendications 1 à 7, **caractérisé** par le fait que le bout mort (15) du moteur à moyeu constitue une partie de la construction d'appui dans le système de suspension de la roue.
